# FASCICULE DE BREVET EUROPEEN

(11) **EP 2 192 603 B1**
(45) Date de publication et mention de la délivrance du brevet: **17.10.2012**
(21) Numéro de dépôt: 09177671.6
(22) Date de dépôt: 01.12.2009
(51) Int. Cl.: H01F 27/06, A62C 3/06, E03F 5/16, B65D 90/24, H01F 27/14

(54) **Système de rétention filtrant pour produits chimiques**
Filtrierendes Rückhaltesystem für chemische Produkte
Filtering retention system for chemical products

(30) Priorité: 01.12.2008 FR 0858156; 01.12.2008 FR 0858158
(43) Date de publication de la demande: 02.06.2010
(73) Titulaire: GMT, 84000 Avignon (FR)
(72) Inventeur: Machou, Yves, 30400, Villeneuve les Avignon (FR)

(56) Documents cités:
- EP-A1- 2 287 412
- AU-A4- 2002 100 386
- DE-U1-202008 014 858
- FR-A1- 2 243 819
- FR-A1- 2 382 331
- SE-B- 424 482
- US-A- 3 654 060
- US-A- 4 896 856
- US-A- 5 000 341
- US-A- 5 244 569
- US-A- 5 429 236
- US-A- 5 686 696

## Description

### DOMAINE DE L'INVENTION

L'invention concerne un système de rétention filtrant comprenant une cuve de récupération de liquides ou gels (semi-liquides) chimiques potentiellement inflammables et/ou nocifs pour l'environnement, placée sous un dispositif contenant de tels produits chimiques qui sont susceptibles de fuir.

### ETAT DE LA TECHNIQUE

Il existe un certain nombre de dispositifs, tels que par exemple les transformateurs électriques, qui contiennent des produits chimiques qui sont susceptibles de fuir en cas de disfonctionnement dudit dispositif.

Ces produits étant généralement dangereux (inflammables) et/ou nocifs pour l'environnement, il existe des systèmes de récupération, généralement sous la forme de cuves de rétention placées sous le dispositif pour récupérer les produits fuyants. Le principe général de ces cuves de rétention est qu'elles ont un volume de récupération au moins égal au volume des produits contenus dans le dispositif susceptible de fuir, de sorte que la totalité des produits fuyants, nocifs ou non, sont récupérés en cas de fuite.

De tels systèmes de rétention ne sont toutefois pas efficaces pour les dispositifs qui ne sont pas protégés, notamment de la pluie. En effet dans ce cas, la cuve de rétention pourra être remplie par les eaux pluviales avant même qu'une fuite n'ait lieu, la cuve n'assurant alors plus sa fonction de rétention des produits chimiques en cas de fuite puisqu'elle déborderait.

Il a ainsi été développé des cuves de rétention comprenant un système d'évacuation des liquides contenus dans la cuve associé à un système de filtration destiné a retenir dans la cuve les produits chimiques éventuellement présents. Toutefois, les solutions existantes sont souvent peu efficaces, puisqu'elles ne permettent pas d'empêcher totalement que les produits chimiques soient reversés dans la nature mais seulement de réduire leur quantité. En outre, les solutions connues nécessitent un entretien régulier et complexe.

Par ailleurs, les transformateurs de petite taille, qui sont notamment disposés en hauteur sur les poteaux électrique, sont quant à eux largement négligés. Cela est essentiellement dû au fait que ces transformateurs sont difficiles d'accès, car généralement placés sur des poteaux à plusieurs mètres de hauteur. Certes, le volume d'huile que ces transformateurs de petite taille contient est faible (typiquement inférieur à 150 litres) par rapport aux transformateurs classiques mais le risque de fuite n'en est pas pour autant limité, ni la pollution associée.

Les seules solutions existantes pour placer des bacs ou cuves de rétention en hauteur, en dessous des transformateurs, nécessitent des structures de support complexes, difficiles à mettre en oeuvre. Elles sont en outre très peu discrètes ce qui est très problématique de nos jours.

Un but de la présente invention est donc de proposer un système de rétention filtrant permettant de remédier à au moins un des inconvénients précités.

En particulier, un but de la présente invention est de fournir un système de rétention filtrant qui empêche tout produit chimique d'être reversé dans la nature.

Un autre but de la présente invention est de fournir un système de rétention filtrant dont l'entretien est facilité.

Un but de la présente invention est de fournir un système de rétention filtrant adapté pour être agencé sous un dispositif placé en hauteur, tel que par exemple sous un transformateur électrique placé sur un poteau.

Encore un but de la présente invention est donc de fournir un système de fixation amélioré d'un élément, notamment d'un bac de rétention, sur un poteau pour récupérer les fuites éventuelles d'un transformateur électrique placé en hauteur.

En particulier, un but de la présente invention est de fournir un système de fixation d'un bac de rétention facile à mettre en place sur un poteau, à plusieurs mètres de hauteur, et permettant de supporter un élément quelles que soient les conditions climatiques environnantes.

Un autre but de la présente invention est de fournir un système de fixation d'un bac de rétention pour un transformateur placé en hauteur sur un poteau, de sorte que la présence de la cuve de rétention reste discrète. Le document US-A-5 686 696 décrit un système de rétention pour la récupération de produits pouvant fuir d'un transformateur électrique.

### EXPOSE DE L'INVENTION

A cette fin, on propose un système de rétention pour la récupération de produits pouvant fuir d'un transformateur électrique selon la revendication 1.

Des aspects préférés mais non limitatifs de ce système de rétention filtrant sont les suivants :
- le dispositif d'évacuation comprend un deuxième ensemble de parois agencées de manière à entourer le premier ensemble de parois formant la cavité d'évacuation, et étant à distance desdites parois du premier ensemble de manière à former une cavité intermédiaire, les parois du deuxième ensemble étant agencées pour ménager un espace entre les parois et le fond de la cuve, de manière à laisser passer des liquides de la cuve vers la cavité intermédiaire ;
- le dispositif d'évacuation comprend des grilles filtrantes agencées de manière à entourer le premier ensemble de parois et/ou le deuxième ensemble de parois, lesdites grilles filtrantes étant adaptées pour retenir des matières solides contenues dans la cuve et pour laisser passer les liquides à l'intérieur des cavités intermédiaire et/ou d'évacuation ;
- le tuyau d'évacuation est agencé pour former un siphon d'évacuation ;
- le tuyau d'évacuation est formé de manière à évacuer les liquides présents dans la cavité de manière discontinue ;
- le système de rétention filtrant comprend en outre un dispositif de filtration complémentaire, ledit dispositif de filtration comprenant un boitier fixé sous le fond de la cuve de sorte que la sortie du tuyau d'évacuation soit située à l'intérieur du boitier ;
- la portion du tuyau d'évacuation à l'intérieur du boitier a des parois percées, et en ce que le dispositif de filtration complémentaire comprend une cartouche filtrante agencée autour de ladite portion du tuyau d'évacuation située à l'intérieur du boitier, la cartouche filtrante comprenant des moyens pour retenir des hydrocarbures présents dans le liquide provenant du tuyau d'évacuation ;
- la cartouche filtrante a une forme cylindrique comprenant une ouverture centrale destinée à recevoir portion du tuyau d'évacuation située à l'intérieur du boitier ;
- le boitier comprend une ouverture permettant une insertion et un retrait de la cartouche filtrante dans le dispositif de filtration complémentaire ;
- le dispositif de filtration complémentaire comprend un tuyau d'évacuation agencé à l'intérieur du boitier de manière à traverser le fond dudit boitier, et étant formé de manière à évacuer les liquides présents dans le boitier.

Accessoirement, ledit système comporte des moyens de fixation de la cuve de récupération sur une armature fixée sur un poteau, lesdits moyens comprenant :
- des moyens de support comprenant une portion en forme de cadre destinée à recevoir l'élément à fixer, ainsi qu'une portion de fixation,
- des moyens d'ancrage destinés à être fixés sur l'armature, lesdits moyens d'ancrage comprenant deux organes de serrage destinés à coopérer pour permettre une fixation des moyens d'ancrage sur l'armature par serrage, lesdits moyens d'ancrage comprenant en outre un organe d'ancrage destiné à coopérer avec la portion de fixation des moyens de support pour ancrer les moyens de support sur les moyens d'ancrage avant de les fixer.

Des aspects préférés mais non limitatifs de ces moyens de fixation sont les suivants :
- l'organe d'ancrage des moyens d'ancrage comprend une tige d'ancrage, et la portion de fixation des moyens de support comprend une platine de fixation dans laquelle est ménagée une lumière, ladite lumière étant adaptée pour être glissée sur la tige d'ancrage pour ancrer les moyens de support sur les moyens d'ancrage ;
- la tige d'ancrage comprend une portion filetée permettant à ladite tige d'ancrage d'être vissée dans les moyens d'ancrage et une portion de serrage agencée à son extrémité libre, ladite portion de serrage étant destinée à serrer la platine de fixation des moyens de support contre l'armature par vissage de la tige d'ancrage ;
- le système de fixation comprend en outre un organe de fixation supplémentaire comprenant deux organes de serrage destinés à coopérer pour fixer des moyens de support sur l'armature par serrage ;
- la portion de fixation des moyens de support a une forme adaptée pour que ladite portion de fixation entoure au moins partiellement l'armature ;

Selon un autre aspect de l'invention, on propose un procédé de fixation d'un élément sur une armature fixée sur un poteau, ladite armature étant destinée à recevoir un transformateur électrique, caractérisé en ce qu'il comprend les étapes successives consistant à :
- fixer des moyens d'ancrage sur l'armature, lesdits moyens d'ancrage comprenant deux organes de serrage coopérant pour que la fixation des moyens d'ancrage soit effectuée par serrage desdits organes de serrage sur l'armature,
- ancrer des moyens de support sur l'armature par l'intermédiaire des moyens d'ancrage, lesdits moyens de support étant destinés à recevoir l'élément à fixer, et
- fixer les moyens de support sur l'armature de manière à empêcher tout mouvement relatif des moyens de support par rapport à l'armature.

Des aspects préférés mais non limitatifs de ce procédé de fixation sont les suivants :
- la fixation par serrage des moyens d'ancrage sur l'armature consiste à rapprocher les organes de serrage l'un de l'autre de manière à prendre en étau une paroi de l'armature ;
- la fixation par serrage des moyens d'ancrage sur l'armature consiste à écarter les organes de serrage l'un de l'autre de manière à venir prendre appui sur des parois de l'armature agencées en vis-à-vis ;
- l'ancrage des moyens de support sur l'armature consiste à glisser une lumière ménagée dans une platine de fixation des moyens de support sur un organe d'ancrage agencée sur les moyens d'ancrage ;
- l'organe d'ancrage comprend une tige filetée permettant audit organe d'ancrage d'être vissé dans les moyens d'ancrage et une portion de serrage agencée à son extrémité libre, de sorte que la fixation des moyens de support sur l'armature comprend une étape consistant à visser l'organe d'ancrage de sorte que la portion de serrage vienne serrer la platine de fixation des moyens de support contre l'armature ;
- la fixation des moyens de support sur l'armature comprend en outre une étape consistant à insérer un organe de fixation supplémentaire comprenant deux organes de serrage coopérant pour que la fixation des moyens de support sur l'armature soit effectuée par serrage desdits organes de serrage ;
- les moyens de support comprennent une portion en forme de cadre sur laquelle est disposé l'élément à fixer;

### DESCRIPTION DES FIGURES

D'autres caractéristiques et avantages de l'invention ressortiront encore de la description qui suit, laquelle est purement illustrative et non limitative et doit être lue en regard des dessins annexés, sur lesquels:
- la figure 1 est une vue en perspective représentant un transformateur électrique fixé en hauteur sur un poteau, associé à un système de rétention filtrant selon l'invention ;
- la figure 2 est une représentation, en vue de dessus, du système de rétention filtrant selon un mode de réalisation de l'invention ;
- la figure 3 est une représentation, en vue de coupe selon la ligne III-III, du système de rétention filtrant de la figure 2 ;
- la figure 4 est une représentation, en vue de coupe, du système de rétention filtrant selon un autre mode de réalisation de l'invention ;
- la figure 5 est une représentation d'ensemble, en vue de dessus, du système de fixation selon l'invention, fixé sur une armature de poteau ;
- la figure 6 est une représentation d'ensemble, en vue de face, du système de fixation de la figure 5 ;
- la figure 7 est une représentation d'ensemble, selon une coupe en vue de côté, du système de fixation de la figure 5 ;
- les figures 8a et 8b sont des représentations, selon des coupes en vue de dessus, de la mise en place sur l'armature des moyens d'ancrage du système de fixation de la figure 5 ;
- la figure 9 est une représentation, en vue de face, des moyens d'ancrage du système de fixation mis en place sur l'armature ;
- la figure 10 est une représentation, selon une coupe en vue de côté, des moyens de support couplés aux moyens d'ancrage qui ont été fixés sur l'armature ;
- la figure 11 est une représentation, en vue de face, des moyens de support couplés aux moyens d'ancrage qui ont été fixés sur l'armature ;
- la figure 12 est une représentation, selon une coupe en vue de dessus, de la mise en place d'un organe de fixation supplémentaire permettant de fixer les moyens de support à l'armature par serrage ;
- la figure 13 est une représentation, selon une coupe en vue de côté, des moyens de support couplés aux moyens d'ancrage qui ont été fixés sur l'armature, les moyens de support étant définitivement fixés sur l'armature par l'organe de fixation supplémentaire ;
- la figure 14 est une représentation, en vue de face, des moyens de support couplés aux moyens d'ancrage qui ont été fixés sur l'armature, les moyens de support étant définitivement fixés sur l'armature par l'organe de fixation supplémentaire.

### DESCRIPTION DETAILLEE DE L'INVENTION

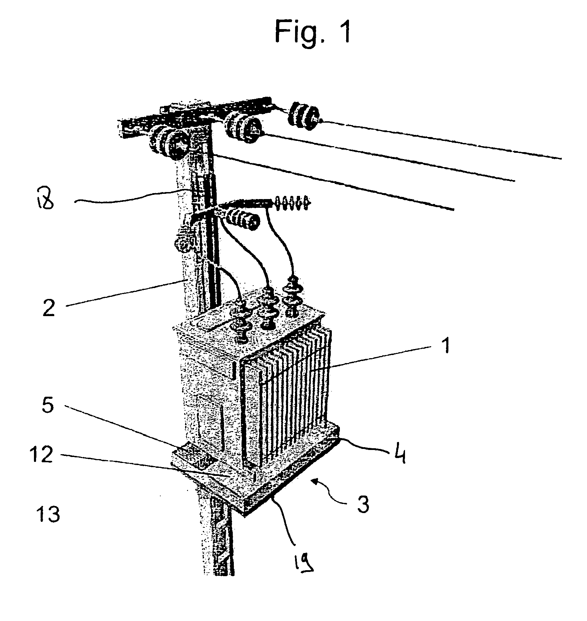

La description qui suit est faite en référence à un système de rétention filtrant adapté pour un transformateur électrique, notamment un système de rétention filtrant 3 pour un transformateur électrique 1 monté sur un poteau 2 comme illustré à la figure 1. Toutefois, l'enseignement correspondant pourrait être appliqué à tout autre dispositif non protégé, non abrité, et contenant des produits chimiques susceptibles de fuir.

Comme on l'a déjà dit, il est aujourd'hui critique de réduire voire de supprimer totalement les pollutions dues aux fuites des produits chimiques contenus dans les transformateurs électriques, comme par exemple les hydrocarbures, ou autres huiles diélectriques. L'objectif du système de rétention filtrant 3 présenté ci-dessous est de piéger les résidus d'hydrocarbures dégagés par le transformateur électrique 1 tout en étant exposé aux conditions atmosphériques.

Le système de rétention filtrant 3 selon l'invention comprend une cuve de rétention 4 destinée à être placée sous le transformateur électrique 1 pour récupérer les produits pouvant fuir de ce transformateur 1, tels que des hydrocarbures.

Cette cuve de rétention 4 est donc adaptée à la taille du transformateur électrique 1 en dessous duquel elle est destinée à être disposée.

La cuve de rétention 1 va également récupérer les eaux pluviales puisque le transformateur électrique 1 est placé à l'extérieur sans être protégé par ailleurs.

Le système de rétention filtrant 3 présenté comprend en outre un dispositif d'évacuation 5 des liquides contenus dans la cuve 4.

Ce dispositif d'évacuation 5 comprend un tuyau d'évacuation 6 agencé de manière à traverser le fond de la cuve 4. Ce tuyau d'évacuation 6 est préférentiellement constitué d'un tube coudé permettant une évacuation en cas de trop-plein.

Le tube d'évacuation 6 est entouré d'un ensemble de parois 7 qui forment une cavité d'évacuation d'un volume déterminé.

Ces parois 7 sont agencées dans la cuve de rétention 4 de manière à ce qu'il existe un espace ménagé entre les parois 7 et le fond de la cuve de rétention 4. Cet espace forme un passage permettant aux liquides présents dans la cuve de rétention 4 d'entrer dans la cavité d'évacuation.

Le tuyau d'évacuation 6 coudé est agencé de manière à ce que son orifice soit placé au-dessus du niveau du fond de la cuve 4, à une hauteur adéquate permettant de réguler le niveau de liquides résiduels dans la cuve de rétention 4, ainsi que le volume des évacuations successives du liquide contenu dans la cavité d'évacuation.

La configuration particulière du dispositif d'évacuation 5 permet en effet d'effectuer une évacuation de la cuve de rétention 4 de manière discontinue, par des largages successifs d'un volume au maximum égal au volume de la cavité d'évacuation. Cela est particulièrement avantageux puisque la proportion d'huile dans cette cavité d'évacuation est en outre limitée par la présence des parois 7 dont les dimensions et le positionnement par rapport au fond de la cuve définissent le volume maximum d'huiles contenues dans la cavité d'évacuation, et donc le volume maximum d'huiles contenues dans chaque largage de liquides à l'extérieur de la cuve de rétention 4.

Selon un mode de réalisation particulier de l'invention, le tuyau d'évacuation 6 a un diamètre d'au moins 0,5 centimètres, de préférence de l'ordre de 1 centimètre, dont l'orifice d'entrée est situé à proximité du fond du bac de sorte que le volume de largage soit sensiblement égal au volume de la cavité d'évacuation. Toutefois, l'orifice d'entrée du tuyau d'évacuation 5 est situé à une distance minimale par rapport au fond du bac, supérieure à la distance séparant les parois 7 formant la cavité d'évacuation par rapport au fond de la cuve de rétention 4, et ce afin d'éviter d'évacuer les hydrocarbures présents dans la cavité d'évacuation. De manière préférée, les parois 7 sont agencées dans la cuve de rétention de manière à laisser un espace de 2 à 5 millimètres au dessus du fond de la cuve de rétention 4, et l'orifice d'entrée du tuyau d'évacuation est situé à au moins 2 centimètres du fond de la cuve de rétention 4.

Le tuyau d'évacuation 6 peut avoir une forme quelconque de manière à former un siphon permettant une évacuation de la cavité d'évacuation par largage. Le tuyau d'évacuation 6 peut en particulier être coudé, avec une portion traversant le fond de la cuve de rétention 4 qui est droite et perpendiculaire par rapport audit fond, et une portion d'entrée également droite formant un angle d'environ 45° par rapport à la portion de sortie du tuyau d'évacuation 6.

La portion coudée du tuyau d'évacuation 6 est située relativement en hauteur par rapport au fond de la cuve de rétention 4, la position de cette portion coudée définissant la hauteur des liquides contenus dans la cuve à partir de laquelle le volume de liquides contenu dans la cavité d'évacuation est évacué. De manière préférée, la cuve de rétention 4 est dimensionnée pour avoir un volume de récupération au moins égal au volume des produits contenus dans le transformateur électrique 1 et susceptibles de fuir. En outre, le tuyau d'évacuation 6 est agencé de sorte que la portion coudée soit située à une hauteur plus importante que la hauteur de cuve correspondant au volume de produits contenus par le transformateur. Ainsi, si le transformateur venait à perdre tout son contenu, la cuve de rétention 4 serait entièrement remplie sans que le dispositif d'évacuation 5 ne soit enclenché. Dans ce cas, le système de rétention filtrant 3 présenté permet une rétention totale des produits fuyants du transformateur 1.

Le dispositif d'évacuation 5 comprend en outre un couvercle 8 destiné à fermer la cavité d'évacuation formée par les parois 7, afin d'éviter que ladite cavité d'évacuation ne se remplisse directement des produits issus du transformateur électrique 1, voire d'autres éléments provenant de l'extérieur comme par exemple des feuilles. De manière préférée, ce couvercle 8 présente une surface légèrement en pente de sorte que les produits fuyants du transformateur électrique 1 soient redirigés à la partie de récupération de la cuve de rétention 4.

De manière préférée, on prévoit en outre des grilles 9 agencées autour des parois 7 formant la cavité d'évacuation, de manière à filtrer les liquides destinés à entrer à l'intérieur de la cavité 7 depuis la partie de récupération de la cuve de rétention 4. Ces grilles 9 permettent de retenir notamment tous les corps étrangers (feuilles, épines, plumes, etc.) venant de l'extérieur et pouvant être présents à l'intérieur de la cuve de rétention 4.

Selon un mode de réalisation particulier de l'invention, le système d'évacuation 5 comprend un deuxième ensemble de parois 10 agencées autour des parois 7 formant la cavité d'évacuation. Ce deuxième ensemble de parois 10 est agencé d'une manière similaire au premier ensemble de parois 7.

En particulier, les parois 10 sont formées dans la cuve de rétention 4 de manière à ce qu'il existe un passage entre les parois 10 et le fond de la cuve de rétention 4 pour que les liquides présents dans la cuve puissent traverser. Ces parois 10 sont en outre agencées dans la cuve de rétention 4 de manière à former un espace intermédiaire entre la cavité d'évacuation et l'espace de récupération à proprement parler de la cuve de rétention 4. Cette cavité intermédiaire permet d'optimiser l'évacuation par largage successif de la cavité d'évacuation puisque cette cavité intermédiaire sert en quelque sorte de zone tampon entre le volume de récupération de la cuve de rétention 4 et la cavité d'évacuation. En outre, cette cavité intermédiaire permet une filtration supplémentaire des liquides destinés à atteindre la cavité d'évacuation, puisque les passages étroits ménagés entre le fond de la cuve 4 et les parois 10 permettent notamment de limiter la quantité d'hydrocarbures pouvant entrer dans la cavité d'évacuation.

De la même manière que précédemment, cet ensemble de parois 10 peut être entouré d'une grille 11 destinée à filtrer les liquides en retenant les corps étrangers à l'intérieur du volume de récupération de la cuve de rétention 4.

En outre, le couvercle 8 destiné à fermer la cavité d'évacuation est de préférence adapté pour couvrir également la cavité de filtration intermédiaire pour que son efficacité soit complète.

Le système de rétention 3 comprend en outre un tapis filtrant 12 agencé dans la portion de récupération de la cuve de rétention 4, entourant notamment le dispositif d'évacuation 5.

Ce tapis de filtration 12 est agencé dans la cuve de rétention 4 de manière à filtrer les liquides présents dans la cuve avant que ceux-ci ne pénètrent dans la ou les cavités formant le dispositif d'évacuation 5.

Ce tapis de filtration 12 est donc formé pour retenir les hydrocarbures présents dans les liquides de la cuve, par absorption par exemple, de manière à éviter qu'ils ne pénètrent dans la cavité d'évacuation. En outre, le tapis de filtration 12 est formé dans une matière perméable à l'eau de sorte que le filtre formé soit hydrophile, c'est-à-dire que l'eau présente dans la cuve puisse passer librement à travers le tapis de filtration 12 sans y être bloquée d'une manière ou d'une autre. Cela permet notamment que l'eau à évacuer puisse entrer dans la ou les cavités du dispositif d'évacuation 5 sans obstacle du tapis de filtration 12.

Le tapis de filtration 12 est choisi et dimensionné pour absorber une quantité d'hydrocarbures la plus importante possible. On pourra notamment dimensionner ce tapis de filtration 12 en fonction de la quantité moyenne annuelle de produits fuyants du transformateur 1, en y appliquant par exemple un facteur 10 ou 20.

L'utilisation du tapis de filtration 12 associée au dispositif d'évacuation 5 est particulièrement avantageuse puisque cela réduit considérablement la probabilité pour que des hydrocarbures entrent dans la ou les cavités du dispositif d'évacuation 5, et qu'ils soient évacués en même temps que l'eau par ce dispositif d'évacuation 5.

En effet, lorsque la cuve de rétention 4 est remplie de liquides comprenant des eaux pluviales et des produits toxiques issus du transformateur électrique 1, tels que des hydrocarbures, la configuration particulière du dispositif d'évacuation 5 permet une évacuation des eaux pluviales avant les hydrocarbures, puisque les hydrocarbures restent en surface dans la cuve de rétention 4 alors que l'eau peut passer librement à travers les passages successifs formés entre les parois 7 et 11 et le fond de la cuve de rétention 4. Lorsque l'eau présente dans la cuve de rétention 4 a été totalement évacuée, ou lorsqu'elle disparait par évaporation par exemple, les hydrocarbures présents dans la cuve se dirigent en direction du fond de la cuve où ils sont absorbés par le tapis de filtration 12. Ainsi, le tapis de filtration 12 empêche lesdits hydrocarbures d'atteindre la ou les cavités formées par le dispositif d'évacuation 5, de sorte que lorsque la cuve de rétention 4 est de nouveau remplie par des eaux pluviales, les hydrocarbures restent prisonniers du tapis filtrant 12 tandis que les eaux pluviales peuvent passer librement dans les passages formés par les parois 7 et 11 successives, et remplir la ou les cavités du dispositif d'évacuation 5 avant d'être évacuées.

Non seulement ce système de rétention 1 est avantageux puisqu'il réduit voire supprime totalement les hydrocarbures rejetés à l'extérieur en même temps que les eaux pluviales, il est en outre particulièrement avantageux par son entretien simple qui nécessite uniquement de remplacer le tapis de filtration 12 lorsque celui-ci est saturé en hydrocarbures.

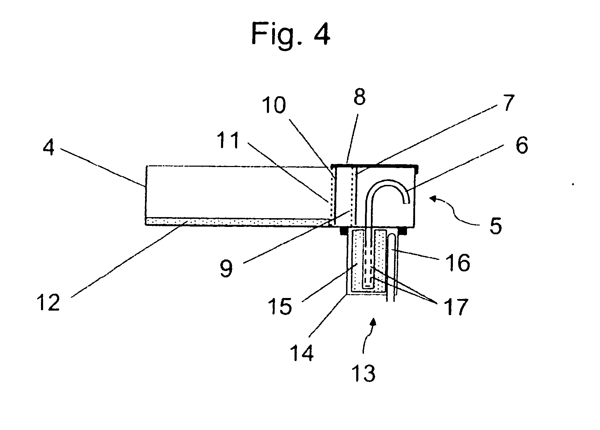

Selon un autre mode de réalisation de l'invention, le système de rétention filtrant 3 comprend en outre un dispositif de filtration complémentaire 13 comme cela est illustré à la figure 4.

Ce dispositif de filtration complémentaire 13 est agencé sous le bac de rétention 4 au niveau de la sortie du tuyau d'évacuation 6 de manière à filtrer les liquides qui sont targués par le dispositif d'évacuation 5. Comme on l'a vu, le système de rétention 3 permet de retenir la quasi-totalité des hydrocarbures à l'intérieur de la cuve de rétention 4 au niveau du tapis de filtration 12. Le dispositif de filtration complémentaire 13 permet de retenir les infimes quantités d'hydrocarbures qui pourraient tout de même être rejetées par le dispositif d'évacuation 5. Ce dispositif de filtration complémentaire 13 est notamment très utile lorsque le tapis de filtration 12 est saturé en hydrocarbures et n'assure plus sa fonction de barrière, de sorte que les hydrocarbures présents dans la cuve de rétention 4 peuvent atteindre la cavité d'évacuation et être en partie évacués par le dispositif d'évacuation 5.

On notera par ailleurs que le dispositif de filtration 13 pourrait être utilisé avec un système de rétention tel que présenté précédemment dans lequel il n'y aurait pas de tapis de filtration 12.

De manière préférée, le dispositif de filtration complémentaire 13 est contenu dans un boitier 14 agencé sous la cuve de rétention 4 au niveau de la sortie du tuyau d'évacuation 6 de manière à enfermer cette sortie d'évacuation. Ce boitier 14 peut être fabriqué de manière intégrale avec la cuve de rétention 4 ou peut être un élément rapporté, fixé de manière amovible ou non sous la cuve de rétention 4. Le boitier 14 a de préférence une forme cylindrique.

Dans le cas où un tel dispositif de filtration complémentaire 13 est utilisé, la portion de sortie du tuyau d'évacuation 6 situé à l'intérieur du boitier 14 comprend des parois avec des ouvertures 17, sous forme de trous ou de fentes, de sorte que le liquide évacué de la cuve de rétention 4 puisse sortir de manière latérale par rapport à l'axe de la portion de sortie de tuyau d'évacuation 6.

Le boitier 14 enferme par ailleurs un matériau filtrant 15 destiné à retenir, par absorption par exemple, les hydrocarbures présents dans le liquide évacué par le dispositif d'évacuation 5. Cet élément filtrant 15 a de préférence la forme d'une cartouche cylindrique munie d'une ouverture centrale de sorte que ladite cartouche filtrante 15 puisse être insérée dans le boitier 14 de manière à entourer la portion percée du tuyau d'évacuation 6.

L'utilisation d'un élément filtrant 15 sous la forme d'une cartouche, de préférence cylindrique, est particulièrement avantageuse puisqu'une telle cartouche peut être facilement mise en place à l'intérieur du boitier 14, ou retirée de ce boitier 14, notamment au cours des phases d'entretien du système de rétention filtrant 1. A cette fin, on peut par exemple prévoir une ouverture au niveau du fond du boitier 14 pour un changement de la cartouche filtrante 15 par le dessous de la cuve de rétention 4.

Le dispositif de filtration complémentaire comprend enfin un tuyau d'évacuation 16 ayant une forme et un fonctionnement similaire au tuyau d'évacuation 6 du dispositif d'évacuation 5.

En particulier, le tuyau d'évacuation 16 a une forme coudée permettant également une évacuation du boitier 14 de manière discontinue, par largages successifs.

De manière préférée, le dispositif de filtration complémentaire 13 est agencé au centre de la cuve de rétention 4 de manière à pouvoir être situé dans l'axe du poteau 2 portant le transformateur électrique 1 de sorte que ce dispositif de filtration complémentaire 13 soit le moins visible possible.

Le fonctionnement du système de rétention filtrant 3 présenté est donc le suivant. La première phase consiste en la collecte de résidus d'huiles et d'eau atmosphérique. Si le niveau dans le bac de rétention 4 monte jusqu'au niveau de l'embouchure coudée du tube d'évacuation 6, les eaux provenant du fond de la cuve 4 sont évacuées par l'orifice d'entrée du tuyau de trop-plein 6 et sont déversées à l'extérieur de la cuve de rétention 4. En conséquence, les eaux sont évacuées de la cuve 4 jusqu'au moment où le niveau de la charge descend vers l'orifice d'entrée du tuyau d'évacuation 6, c'est-à-dire à une hauteur de 2 cm environ, pour aspirer de l'air et terminer l'aspiration des eaux de la cuve 4 présent dans la cavité d'évacuation. Les huiles et autres hydrocarbures ayant fuit du transformateur sont maintenus en une couche fine toujours au-dessus du niveau de l'eau, et sont absorbés par le tapis absorbant 12 lorsque les eaux sont évacuées et que le niveau de liquides dans la cuve diminue, de sorte que ces produits d'hydrocarbures ne sont pas aspirés.

S'il y a néanmoins des fuites d'huiles avec l'eau évacuée par le tube d'évacuation 6, ces eaux évacuées de la cuve 4 sont menées par le tuyau d'évacuation 6 dans le dispositif de filtration complémentaire 13. La matière absorbante 15 est arrosée de liquide dans le boitier 14 et absorbe les quantités résiduelles d'huile qui se seraient échappées de la cuve de rétention 4. Les eaux ainsi dégagées de toute addition d'huiles sont évacuées du boitier 14 par le tuyau d'écoulement 16.

Le fonctionnement du bac de rétention 4 comprenant un tapis de filtration 12 associé au dispositif d'évacuation 5 suffit à lui seul pour limiter de façon importante le rejet d'huile dans le milieu environnant. Le dispositif de filtration complémentaire 13 apporte toutefois une sécurité supplémentaire vers une pollution zéro, utile notamment dans les zones à risques comme les lieux de captation d'eau potable ou dans les régions et paysages protégés.

Par ailleurs, comme cela est représenté sur la figure 1, les transformateurs électriques 1 prévus pour être placés sur des poteaux électriques 2 sont généralement fixés au poteau 2 par l'intermédiaire d'une armature 3 placée au sommet dudit poteau 2, c'est-à-dire à plusieurs mètres de hauteur. Cette armature 3, généralement métallique, permet d'éviter de fixer directement le transformateur électrique 1 sur le poteau 2, et facilite donc les opérations de montage, et éventuellement de démontage, du transformateur 1.

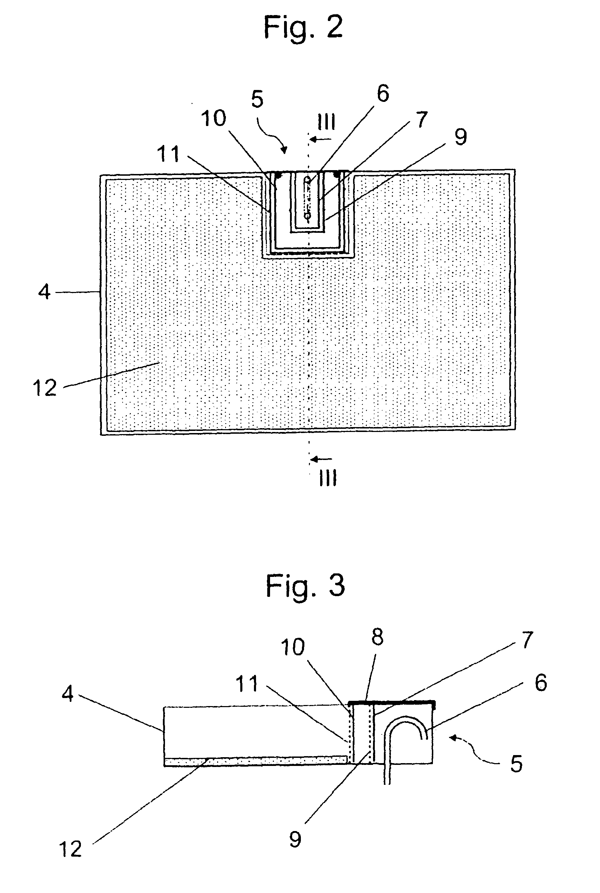

L'armature 3 utilisée pour la fixation du transformateur 1 sur le poteau 2 peut avoir plusieurs formes, L'armature est de préférence longitudinale selon l'axe du poteau. La figure 1 illustre un mode particulier de réalisation d'une telle armature 3 qui se présente sous la forme de deux barres métalliques en forme de U qui se font face l'une de l'autre. On voit en effet sur la figure 2 une vue de dessus de ces barres longitudinales en forme de U qui forment l'armature 3 et dont les portions concaves se font face. Cette armature 3 est fixée sur le poteau 2 par tout moyen de fixation, tels que des collets de serrage. Un orifice est prévu dans chacune des barres en forme de U de manière à pouvoir insérer une tige transversale sur laquelle on va pouvoir accrocher le transformateur électrique 1 qui est pourvu de crochets adaptés pour coopérer avec ladite barre transversale.

L'armature 3 n'est toutefois pas adaptée pour recevoir un autre élément, tel qu'un bac de rétention 4 dont l'objectif serait de récupérer les produits pouvant fuir du transformateur électrique 1. Il est donc nécessaire d'utiliser un système de fixation 19 adapté pour une mise en place d'un élément, tel qu'une cuve de rétention 4, sur le poteau 2, en dessous du transformateur électrique 1.

Outre le fait que l'armature 3 ne possède pas d'autres moyens d'accroche qui permettraient de fixer un autre élément que le transformateur électrique 1, il existe de fortes contraintes de sécurité à respecter pour fixer l'élément, tel qu'un bac de rétention 4, en-dessous dudit transformateur électrique 1. Ces contraintes de sécurité sont notamment liées au fait que le transformateur électrique 1 peut être en fonctionnement lorsque la cuve de rétention 4 est fixé sur le poteau, mais sont également liées au fait que l'opérateur chargé d'installer la cuve de rétention 4 doit travailler à plusieurs mètres de hauteur. Ainsi, il est impératif que le système de fixation 19 de la cuve de rétention 4 soit simple à mettre en place, pour qu'il puisse en particulier être installé par un seul opérateur, sans que celui-ci soit gêné par la hauteur de travail, par le poids des pièces fixées, et/ou par le fonctionnement du transformateur électrique 1.

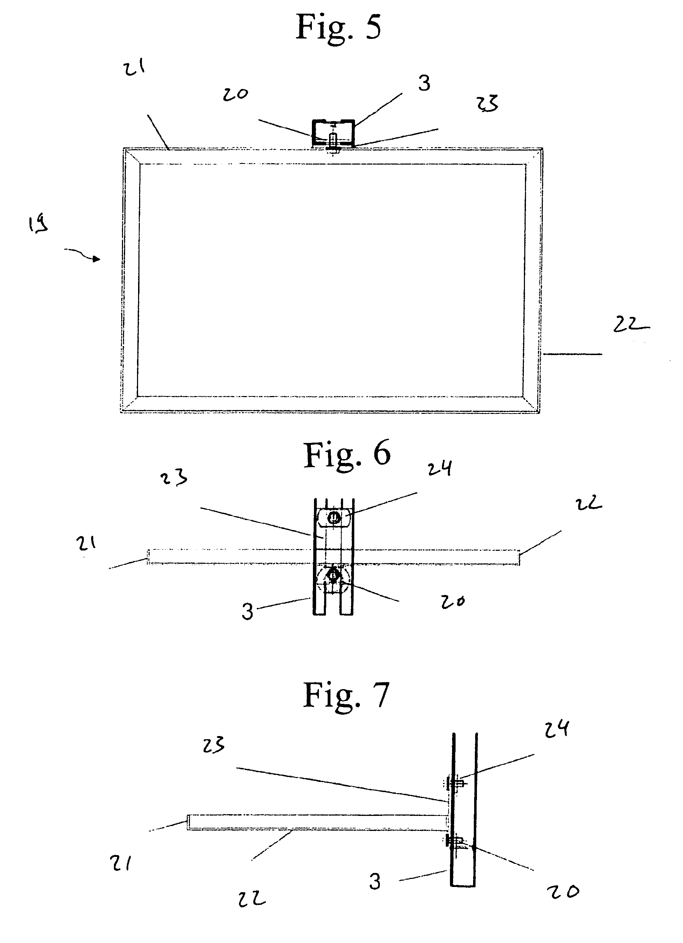

Les figures 5 à 7 sont des représentations d'ensemble du système de fixation 19 que l'on propose d'utiliser pour fixer n'importe quel élément, tel qu'une cuve de rétention 4 sur une armature 3 fixée à un poteau 2.

Ce système de fixation 19 comprend plusieurs parties distinctes qui permettent un montage progressif de l'ensemble en vue d'une fixation finale de la cuve de rétention 4.

Le système de fixation 19 comprend tout d'abord des moyens d'ancrage 20 qui vont être utilisés au cours d'une première étape du processus de fixation pour former l'organe sur lequel le reste du système de fixation va pouvoir être accroché, comme on va le voir en détail plus loin.

Le système de fixation 19 comprend en outre des moyens de support 21 sur lesquels va pouvoir reposer la cuve de rétention 4, ou tout autre élément destiné à être placé en hauteur au niveau du transformateur électrique 1.

Ces moyens de support 21 comprennent une première portion 22 en forme de cadre prévue pour recevoir la cuve de rétention 4 destiné à récupérer les produits qui pourraient fuir du transformateur 1. De manière générale, les transformateurs électriques ont une forme générale sensiblement parallélépipédique, de sorte que les bacs de rétention 4 associés ont en général une forme rectangulaire et que le cadre 22 du système de fixation est donc également de forme rectangulaire. Toutefois, si l'élément à fixer avait une autre forme, en particulier une forme circulaire, la forme du cadre serait alors adaptée pour pouvoir supporter un tel élément.

Notons dès à présent l'avantage significatif que présente le fait de dissocier la cuve de rétention 4 de son élément support, cet élément support se présentant sous la forme d'une portion en forme de cadre 22. En effet, lors de la mise en place du système de fixation 19, et en particulier du dispositif de support 21, l'opérateur peut travailler à travers l'ouverture ménagée dans la portion en forme de cadre 22, ce qui permet notamment de réduire les risques de toucher le transformateur électrique 1 puisque toutes les opérations visant à fixer le système de fixation 19 sur l'armature 3 peuvent être effectuées depuis la partie inférieure du cadre 22 par rapport au transformateur électrique 1.

Les moyens de support 21 comprennent en outre une portion de fixation 23 qui est destinée à coopérer avec les moyens d'ancrage 20 pour assurer dans un premier temps un ancrage du dispositif de support 21 sur l'armature 3, c'est-à-dire une préfixation, puis pour permettre une fixation définitive de l'ensemble du système de fixation 19 sur l'armature 3.

La portion en forme de cadre 22 et la portion de fixation 23 sont couplées de préférence par soudage, la fixation de ces deux portions étant adaptée pour supporter non seulement le poids de la cuve de rétention 4 que la portion en forme de cadre va recevoir, mais également pour résister aux différentes contraintes, notamment climatiques, auxquelles va être soumis le poteau.

Le système de fixation 19 peut enfin être pourvu d'un organe de fixation supplémentaire 24 dont la fonction sera d'opérer la fixation définitive du système de fixation 19 sur l'armature 3, et/ou de compléter la fixation déjà obtenue par coopération des moyens d'ancrage 20 avec la portion de fixation 23 des moyens de support 21.

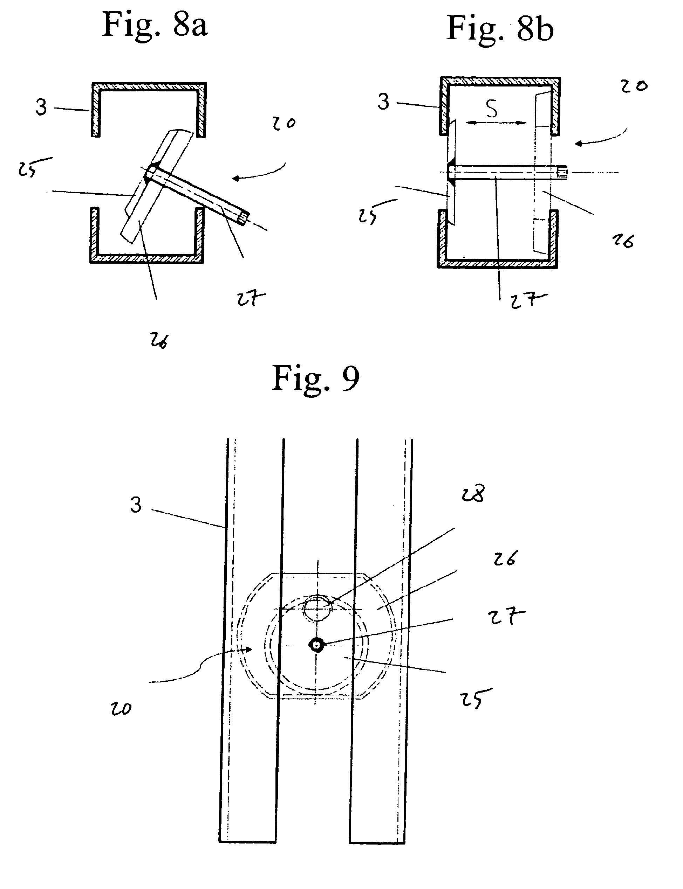

Les figures 8a et 8b illustrent la mise en place des moyens d'ancrage 20 sur l'armature 3, elle-même fixée sur un poteau (non représenté).

Le dispositif d'ancrage 20 du système de fixation 19 permet de former une structure sur laquelle les autres éléments du système de fixation 19 vont pouvoir être accrochés, de manière à faciliter les opérations visant à fixer définitivement le système de fixation 19 sur l'armature 3.

De manière préférée le dispositif d'ancrage 20 comprend deux organes de serrage 25 et 26 qui sont adaptés pour coopérer de manière à assurer une fixation dudit dispositif d'ancrage 20 par serrage sur l'armature 3.

Dans le mode de réalisation présenté aux figures 8a et 8b, le dispositif d'ancrage 20 comprend deux plaques 25 et 26 qui sont couplées par l'intermédiaire d'une tige filetée 27.

La plaque de serrage 25 est fixée à l'une des extrémités de la tige filetée 27 tandis que la plaque de serrage 26 comprend un orifice pourvu d'un filetage permettant de coopérer avec le filetage de la tige 27 de sorte que les plaques de serrage 25 et 26 peuvent être rapprochées ou écartées l'une de l'autre par manipulation de la tige filetée 27.

Sur les figures 8a et 8b, l'armature 3 a la forme présentée plus haut, à savoir que l'armature 3 est composée de deux barres longitudinales en forme de U en regard l'une de l'autre. Dans ce mode réalisation, le dispositif d'ancrage 20 est adapté pour pouvoir être inséré à l'intérieur de l'espace formé par les deux barres en forme de U formant l'armature 3, à travers la fente séparant ces deux barres en forme de U. L'insertion du dispositif d'ancrage 20 à l'intérieur de l'armature 3 peut être effectuée par la simple manipulation de l'extrémité libre de la tige filetée 27. Une fois que ce dispositif d'ancrage 20 est disposé à l'intérieur de l'espace ménagé par l'armature 3, il convient d'actionner la tige filetée 27 pour pouvoir déplacer les plaques de serrage 25 et 26 afin qu'elles viennent s'appuyer contre l'armature 3, en vue d'une fixation du dispositif d'ancrage 20.

Dans le mode réalisation présenté, le serrage du dispositif d'ancrage 20 sur l'armature 3 est effectué par écartement des organes de serrage 25 et 26, par actionnement de la tige filetée 27, de sorte que lesdites plaques de serrage 25 et 26 viennent prendre appui sur des faces opposées de l'armature 3, assurant ainsi un serrage et une fixation définitive du dispositif d'ancrage 20 sur l'armature 3 par écartement.

Un tel dispositif d'accroche 20 est particulièrement avantageux puisque sa manipulation peut être effectuée exclusivement par l'intermédiaire de l'extrémité libre de la tige filetée 27, c'est-à-dire depuis l'extérieur de l'armature 3, et est donc relativement simple à mettre en oeuvre par un opérateur seul.

Au vu du faible écartement séparant généralement les barres en forme de U formant l'armature 3, il est préférable que les plaques de serrage 25 et 26 aient une forme particulière facilitant leur insertion à travers cette fente. On pourra notamment utiliser une plaque de serrage 26 ayant une forme avec un côté ayant une dimension plus courte que l'autre par rapport à l'orifice prévu pour la tige filetée 27, de sorte que ladite plaque de serrage 26 puisse être insérée par le grand côté à travers la fente et que le petit côté puisse être inséré dans un deuxième temps. Dans ce cas, il convient de tourner le dispositif d'ancrage 20 d'un quart de tour après l'avoir inséré à l'intérieur de l'armature 3 de manière à ce que l'appui des plaques de serrage 25 et 26 sur les parois intérieures de l'armature 3 soit réparti de façon égale.

La figure 9 illustre un mode de réalisation particulier du dispositif d'ancrage 20 présenté dans lequel la plaque de serrage 25 a une forme circulaire et est fixée à la tige filetée 27 en son centre. La plaque de serrage 26 a quant à elle une forme circulaire tronquée, d'un diamètre supérieur à la plaque circulaire 25. Par ailleurs, l'orifice prévu dans la plaque de serrage 26 pour le passage de la tige filetée 27 est excentré par rapport à la forme circulaire tronquée de la plaque de serrage 26 de manière à former un côté ayant une dimension plus grande que l'autre côté, ce côté à plus grande dimension étant destiné à être inséré en premier dans l'espace intérieur de l'armature 3.

En outre, la plaque de serrage 26 est munie d'un deuxième orifice fileté 28, généralement plus large que l'orifice permettent la manoeuvre de la tige filetée 27, et dont on verra l'utilité plus loin.

Le dispositif d'ancrage 20 présenté n'est bien entendu qu'un exemple de réalisation parmi d'autres et sera adapté en particulier en fonction de la forme de l'armature sur laquelle on cherche à fixer la cuve de rétention 4. En particulier, on pourra prévoir un dispositif d'ancrage 20 dont les organes de serrage 25 et 26 fonctionnent comme des mâchoires venant serrer l'une des parois de l'armature 3, à la manière d'un étau. Il est à noter que le dispositif d'ancrage 20 présenté est particulièrement avantageux puisqu'il peut être facilement adapté à tout type d'armature, sans avoir à modifier, transformer, ou agir en quoi que ce soit sur ladite armature. En effet, le dispositif d'ancrage 20 présenté est adaptable à tout type d'armature.

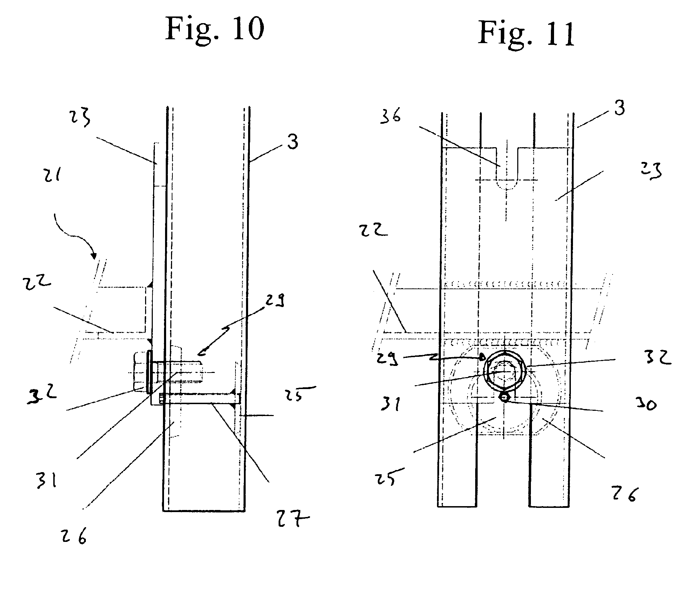

Les figures 10 et 11 illustrent la deuxième étape de mise en place du système de fixation 19 destiné à supporter la cuve de rétention 4 en dessous du transformateur électrique 1.

Le dispositif d'ancrage 20 étant désormais fixé sur l'armature 3, il convient de mettre en place le dispositif de support 21 qui permettra ultérieurement de fixer l'élément à suspendre à proximité du transformateur électrique 1.

Pour ce faire, il convient tout d'abord de finaliser le dispositif d'ancrage 20 en insérant partiellement un organe d'ancrage 29, ayant la forme par exemple d'une tige filetée, à l'intérieur de l'orifice fileté 28 ménagé dans la plaque de serrage 26 comme mentionné plus haut.

Une fois ce point d'ancrage formé sur le dispositif d'ancrage 20, le dispositif de support 21 peut être accroché, ancré, au niveau de l'armature 3.

Pour ce faire, la portion de fixation 23 du dispositif de support 21 comprend une lumière 30, généralement à l'une de ses extrémités, qui est adaptée pour être insérée sur la tige filetée 31 servant d'organe d'ancrage 29.

La coopération de l'organe d'ancrage 29 et de la lumière 30 ménagée dans la portion de fixation 23 permet d'ancrer le dispositif de support 21 à l'armature 3 par encastrement.

L'organe d'ancrage 29 comprend une portion de serrage 32 à son extrémité libre de manière à plaquer la platine de fixation 23 dans laquelle est ménagée la lumière 30 contre la paroi externe de l'armature 3 comme on peut le voir sur la figure 10.

La forme particulière des différents éléments constituant le système de fixation 19 permet à cette structure d'être très facilement fixée à l'armature 3, elle-même fixée au poteau 2. En effet, une fois que le système d'ancrage 20 est fixé à l'armature 3, avec son organe d'ancrage 29, il suffit de glisser le dispositif de support 21 sur la tige formée par l'organe d'encrage 29 à travers la lumière 30 ménagée dans la platine de fixation 23 du dispositif de support 21. La forme particulière de la platine de fixation 23 et de l'organe d'ancrage 29 permet d'assurer le couplage requis du dispositif de support 21, notamment par coopération de la portion de fixation 23 pourvue de la lumière 30 par rapport à la portion de serrage 32 de l'organe d'ancrage 29 et de la paroi externe de l'armature 3.

Lorsque l'organe d'ancrage 29 est ajusté au plus près de la paroi externe de l'armature 3, tout en laissant un passage suffisant pour l'insertion de la platine de fixation 23 à travers la lumière 30, alors la coopération de la portion de fixation 23 avec la portion de serrage 32 de l'organe d'ancrage 29 aura non seulement une fonction d'ancrage du dispositif de support 21, mais également une fonction de fixation préalable du système de fixation 19 sur l'armature 3. Si ce n'est pas le cas, il suffira de visser légèrement l'organe d'ancrage 29 de manière à rapprocher la portion de serrage 32 de la platine de fixation 23.

Selon un mode de réalisation particulier, la portion de fixation 23 a une forme un peu plus complexe qu'une simple platine. En particulier, on peut prévoir une portion de fixation 23 ayant une forme de U, qui permettra notamment d'entourer au moins partiellement la structure servant d'armature 3. Une telle forme pour la portion de fixation 23 est particulièrement avantageuse puisqu'il ne sera plus nécessaire d'avoir une insertion de l'organe d'ancrage 29 au plus près de la paroi externe de l'armature 3 pour que le dispositif de support 21 soit maintenu en position après avoir été inséré sur l'organe d'ancrage 29 par l'intermédiaire de la lumière 30. En effet, les parties latérales de la portion de fixation 23 permettent de réduire considérablement les mouvements relatifs du dispositif de support 21 par rapport à l'armature 3, empêchant notamment toute rotation de la portion de fixation 23 autour de l'axe formé par la tige filetée de l'organe d'ancrage 29.

Une fois que le dispositif de support 21 est ancré sur le dispositif d'ancrage 20, ce qui correspond à une fixation préalable du système de fixation 19 sur l'armature 3, il convient de fixer définitivement le dispositif de support 21 sur l'armature 3 de sorte qu'aucun mouvement relatif de l'un par rapport à l'autre ne soit possible.

Pour ce faire, il convient tout d'abord de compléter l'insertion de l'organe d'ancrage 29 à l'intérieur de la plaque de serrage 26 du dispositif d'ancrage 20. Cette insertion va en effet permettre de plaquer complètement la portion de serrage 32 dudit organe d'ancrage 29 contre la platine de fixation 23 qui vient elle-même s'appuyer contre l'armature 3.

En fonction de la forme de la portion de fixation 23 et de l'aménagement de la lumière 30 dans cette portion de fixation 23, le serrage de la portion de fixation 23 contre l'armature 3 par serrage entre la portion de serrage 32 de l'organe d'ancrage 29 et la plaque de serrage 26 peut suffire à établir une fixation définitive du système de fixation 19 sur l'armature 3.

Il est toutefois possible de prévoir un organe de fixation supplémentaire 24 qui permet de compléter le serrage effectué par coopération de la portion de serrage 32 de l'organe d'ancrage 29 avec la plaque de serrage 26, notamment lorsque la portion de fixation 23 consiste en une simple platine.

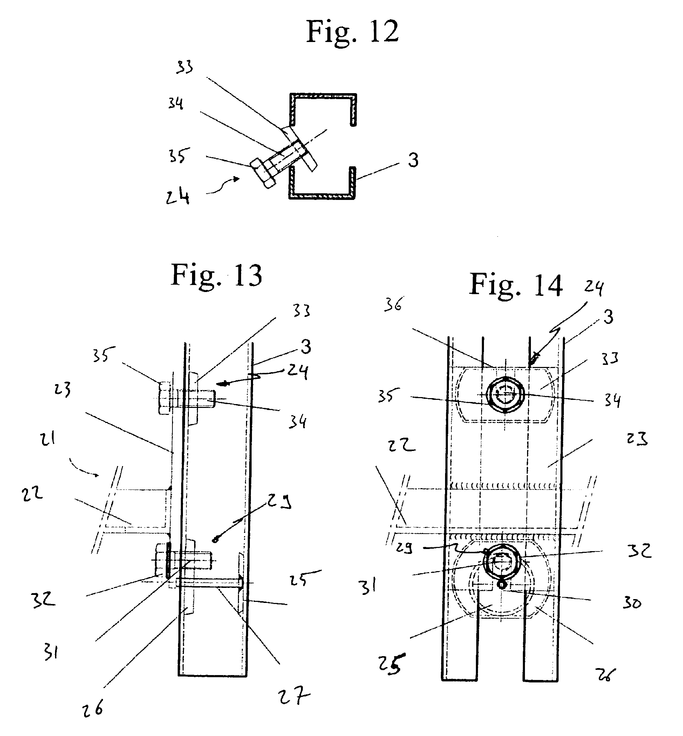

Les figures 12 à 14 illustrent un mode de réalisation possible d'un tel organe de fixation supplémentaire 24. Selon ce mode de réalisation, l'organe de fixation supplémentaire 24 comprend une plaque de serrage 33 pourvue d'un orifice fileté à l'intérieur duquel est insérée une tige filetée 34 dont l'extrémité libre comprend une portion de serrage 35.

De la même manière que le dispositif d'ancrage 20, l'organe de fixation supplémentaire 24 est adapté pour être inséré à l'intérieur de l'espace formé par l'armature 3, à travers la fente séparant les deux barres en U formant ladite armature 3.

Une fois que la plaque de serrage 33 est insérée à l'intérieur de l'armature 3, la tige filetée 34 est insérée à l'intérieur d'une deuxième lumière 36 ménagée dans la platine de fixation 23, au niveau de l'extrémité opposée à l'extrémité au niveau de laquelle la première lumière 30 est ménagée.

La plaque de serrage 33 est ensuite pivotée d'un quart de tour de manière à maximiser la surface d'appui de ladite plaque de serrage 33 contre les parois internes de l'armature 3.

Enfin, l'extrémité libre de l'organe de fixation supplémentaire 24 est actionnée de manière à visser la tige filetée 34 à l'intérieur de l'orifice prévu dans la plaque de serrage 33. De ce fait, la portion de serrage 35 se rapproche contre la plaque de serrage 33 afin de prendre en étau la paroi de l'armature 3 et la portion de fixation 23, ces deux pièces étant serrées l'une contre l'autre pour augmenter la fixation du système de fixation 19 sur l'armature 3.

Une fois encore, l'insertion et la manipulation de l'organe de fixation supplémentaire 24 peut être effectuée entièrement depuis l'extérieur par l'intermédiaire de l'extrémité libre de l'organe de fixation supplémentaire 24 de sorte que cette étape de fixation supplémentaire en est facilitée.

Une fois que le système de fixation 19 est solidement fixé sur l'armature 3, il suffit de disposer la cuve de rétention 4, ou tout autre élément destiné à être fixé au niveau du transformateur 1, sur la portion en forme de cadre 22 du dispositif de support 21.

Il est préférable que l'élément à disposer sur la portion en forme de cadre soit réellement fixé sur ladite portion en forme de cadre 22 et pas seulement posé sur cette portion.

A cette fin, on peut par exemple prévoir des orifices dans la portion en forme de cadre 22 à travers lesquels pourront être insérées des tiges filetées ménagées sur la face externe de l'élément à fixer. Il conviendra ensuite simplement de visser des organes de serrage sur ces tiges filetées, comme par exemple des boulons.

Une autre solution peut consister à former des tiges sur les parois latérales externes de la portion en forme de cadre 22 du dispositif de support 21, ces tiges étant couplées à des organes formant crochets. Dans ce cas, les crochets permettent de crocheter la cuve de rétention 4 disposé sur la portion en forme de cadre 22 de sorte qu'il reste solidaire du système de fixation 19.

Si le système et le procédé de fixation présentés sont décrits en référence à la fixation d'un bac de rétention muni de moyens de filtration sous un transformateur électrique fixé sur un poteau par l'intermédiaire d'une armature métallique, l'invention n'est en aucun cas limitée à cette application particulière et pourra être utilisée pour la fixation de tout élément sur une armature placée en hauteur, comme sur un poteau par exemple.

De plus, il est bien évident que le système de fixation 19 pourra être utilisé pour la fixation d'un bac de rétention quelconque ne comportant pas de moyens de filtration sans pour autant sortir du cadre de l'invention.

Le lecteur aura compris que de nombreuses modifications peuvent être apportées sans sortir matériellement des nouveaux enseignements et des avantages décrits ici. Par conséquent, toutes les modifications de ce type sont destinées à être incorporées à l'intérieur de la portée du système et du procédé de fixation d'un bac de rétention pour transformateur électrique fixé sur un poteau présentés.

## Revendications

1. Système de rétention (3) pour la récupération de produits pouvant fuir d'un transformateur électrique (1), comprenant une cuve de récupération (4) desdits produits, ladit système comprend en outre :
- un dispositif d'évacuation (5) de liquides contenus dans la cuve (4), **caracterisé en ce que** le dispositif d'évacuation comprend :
• un ensemble de parois (7) formant une cavité d'évacuation, un espace étant ménagé entre les parois et le fond de la cuve (4), de manière à laisser passer des liquides de la cuve (4) vers la cavité d'évacuation,
• un couvercle (8) fermant la cavité d'évacuation formée par les parois (7) afin d'éviter que ladite cavité d'évacuation ne se remplisse directement des produits issus du transformateur électrique, et
• un tuyau d'évacuation (6) agencé dans la cavité d'évacuation de manière à traverser le fond de la cuve (4), et étant formé de manière à évacuer les liquides présents dans la cavité,
- un tapis de filtration (12) agencé sur le fond de la cuve (4) de manière à filtrer les liquides de la cuve (4) avant d'atteindre la cavité d'évacuation, ledit tapis de filtration (12) étant perméable à l'eau et comprenant des moyens pour retenir des hydrocarbures présents dans les liquides de la cuve (4).

2. Système de rétention selon la revendication 1, **caractérisé en ce que** le dispositif d'évacuation (5) comprend un deuxième ensemble de parois (10) agencées de manière à entourer le premier ensemble de parois (7) formant la cavité d'évacuation, et étant à distance desdites parois (7) du premier ensemble de manière à former une cavité intermédiaire, les parois (10) du deuxième ensemble étant agencées pour ménager un espace entre les parois (10) et le fond de la cuve (4), de manière à laisser passer des liquides de la cuve (4) vers la cavité intermédiaire.

3. Système selon l'une des revendications 1 ou 2, **caractérisé en ce que** le dispositif d'évacuation (5) comprend des grilles filtrantes (9, 11) agencées de manière à entourer le premier ensemble de parois (7) et/ou le deuxième ensemble de parois (10), lesdites grilles filtrantes (9, 11) étant adaptées pour retenir des matières solides contenus dans la cuve (4) et pour laisser passer les liquides à l'intérieur des cavités intermédiaire et/ou d'évacuation.

4. Système selon l'une des revendications 1 à 3, **caractérisé en ce que** le tuyau d'évacuation (6) est agencé pour former un siphon d'évacuation.

5. Système selon l'une des revendications 1 à 4, **caractérisé en ce que** le tuyau d'évacuation (6) est formé de manière à évacuer les liquides présents dans la cavité de manière discontinue.

6. Système selon l'une des revendications 1 à 5, **caractérisé en ce qu'**il comprend en outre un dispositif de filtration complémentaire (13), ledit dispositif de filtration (13) comprenant un boitier (14) fixé sous le fond la cuve (4) de sorte que la sortie du tuyau d'évacuation (6) soit située à l'intérieur du boitier (14).

7. Système selon la revendication 6, **caractérisé en ce que** la portion du tuyau d'évacuation (6) à l'intérieur du boitier a des parois percées, et **en ce que** le dispositif de filtration complémentaire (13) comprend une cartouche filtrante (15) agencée autour de ladite portion du tuyau d'évacuation (5) située à l'intérieur du boitier (14), la cartouche filtrante (15) comprenant des moyens pour retenir des hydrocarbures présents dans le liquide provenant du tuyau d'évacuation (5).

8. Système selon la revendication 7, **caractérisé en ce que** la cartouche filtrante (15) a une forme cylindrique comprenant une ouverture centrale destinée à recevoir portion du tuyau d'évacuation (5) située à l'intérieur du boitier (14).

9. Système selon l'une des revendications 7 ou 8, **caractérisé en ce que** le boitier (14) comprend une ouverture permettant une insertion et un retrait de la cartouche filtrante (15) dans le dispositif de filtration complémentaire (13).

10. Système selon l'une quelconque des revendications 7 à 9, **caractérisé en ce que** le dispositif de filtration complémentaire (13) comprend un tuyau d'évacuation (16) agencé à l'intérieur du boitier (14) de manière à traverser le fond dudit boitier (14), et étant formé de manière à évacuer les liquides présents dans le boitier (14).

11. Système selon l'une quelconque des revendications 1 à 10, **caractérisé en ce qu'**il comporte des moyens de fixation de la cuve de récupération (4) sur une armature (3) fixée sur un poteau (2), lesdits moyens comprenant :
- des moyens de support (21) comprenant une portion en forme de cadre (22) destinée à recevoir l'élément (4) à fixer, ainsi qu'une portion de fixation (23),
- des moyens d'ancrage (20) destinés à être fixés sur l'armature (3), lesdits moyens d'ancrage (20) comprenant deux organes de serrage (25, 26) destinés à coopérer pour permettre une fixation des moyens d'ancrage (20) sur l'armature (3) par serrage, lesdits moyens d'ancrage (20) comprenant en outre un organe d'ancrage (31) destiné à coopérer avec la portion de fixation (23) des moyens de support (21) pour ancrer les moyens de support (21) sur les moyens d'ancrage (20) avant de les fixer.

12. Système selon la revendication 11, **caractérisé en ce que** l'organe d'ancrage (29) des moyens d'ancrage (20) comprend une tige d'ancrage, et **en ce que** la portion de fixation (23) des moyens de support (21) comprend une platine de fixation (23) dans laquelle est ménagée une lumière (30), ladite lumière (30) étant adaptée pour être glissée sur la tige d'ancrage pour ancrer les moyens de support (21) sur les moyens d'ancrage (20).

13. Système selon la revendication 12, **caractérisé en ce que** l'organe d'ancrage (29) comprend une portion filetée (31) permettant à l'organe d'ancrage (29) d'être vissée dans les moyens d'ancrage (20) et une portion de serrage (32) agencée à son extrémité libre, ladite portion de serrage (32) étant destinée à serrer la platine de fixation (23) des moyens de support (20) contre l'armature (3) par vissage de la tige d'ancrage.

14. Système selon l'une des revendications 11 à 13, **caractérisé en ce qu'**il comprend en outre un organe de fixation supplémentaire (24) comprenant deux organes de serrage (33, 35) destinés à coopérer pour fixer des moyens de support (21) sur l'armature (3) par serrage.

15. Système selon l'une des revendications 11 à 14, **caractérisé en ce que** la portion de fixation (23) des moyens de support (21) a une forme adaptée pour que ladite portion de fixation (23) entoure au moins partiellement l'armature (3).

## Claims

1. Retention system (3) for the containment of substances which may leak from an electrical transformer (1), comprising a containment vessel (4) for said substances **characterised in that** it additionally comprises:
- a means for evacuating (5) liquids contained in the vessel (4) said evacuation means comprising:
• a set of walls (7) forming an evacuation chamber, a space being formed between the walls and bottom of the vessel (4) so as to let liquids pass from vessel (4) into the evacuation chamber.
• a cover (8) closing the evacuation chamber formed by walls (7) to prevent said evacuation chamber from directly filling with substances emanating from the electrical transformer, and
• an outlet pipe (6) arranged in the evacuation chamber to traverse the bottom of the vessel (4) and being formed to remove liquids present in the chamber,
- a filtration mat (12) fitted to the bottom of vessel (4) to filter liquids from vessel (4) before reaching the evacuation chamber, said filtration mat (12) being permeable to water and comprising means to retain hydrocarbons present in the liquids in vessel (4).

2. Retention system according to Claim 1, **characterised in that** the evacuation means (5) comprises a second set of walls (10) arranged so as to surround the first set of walls (7) forming the evacuation chamber and being spaced at a distance from said first set of walls (7) to form an intermediate chamber, second set of walls (10) being arranged to form a space between walls (10) and the bottom of vessel (4) so as to allow liquids from vessel (4) to pass into the intermediate chamber.

3. System according to one of Claims 1 or 2 **characterised in that** evacuation means (5) comprises filtration grilles (9, 11) arranged in such a manner as to surround the first set of walls (7) and/or the second set of walls (10), said filtration grilles (9, 11) being designed to retain solid materials contained in vessel (4) and to let pass through liquids present inside the intermediate and/or evacuation chambers.

4. System according to one of Claims 1 to 3 **characterised in that** the outlet pipe (6) is arranged to form an outflow siphon.

5. System according to one of Claims 1 to 4 **characterised in that** the outlet pipe (6) is formed in such a way as to remove liquids present in the chamber in a discontinuous manner.

6. System according to one of Claims 1 to 5 **characterised in that** it comprises additional filtration device (13), said filtration device (13) comprising a housing (14) fixed under the bottom of vessel (4) so that the exit from outlet pipe (6) is situated inside housing (14).

7. System according to Claim 6 **characterised in that** the section of outlet pipe (6) inside the housing has perforated walls and **in that** the additional filtration device (13) comprises a filter cartridge (15) arranged around said section of outlet pipe (5) situated inside housing (14), filter cartridge (15) comprising means to retain hydrocarbons present in the liquid arriving from outlet pipe (5).

8. System according to Claim 7 **characterised in that** the filter cartridge (15) has a cylindrical form comprising a central opening intended to receive the portion of outlet pipe (5) situated inside housing (14).

9. System according to one of Claims 7 or 8 **characterised in that** housing (14) comprises an opening so that filter cartridge (15) can be inserted into and withdrawn from additional filtration device (13).

10. System according to any of Claims 7 to 9 **characterised in that** the additional filtration device (13) comprises an outlet pipe (16) arranged inside housing (14) to cross the bottom of said housing (14) and being formed in such a way as to remove liquids present in housing (14).

11. System according to any of Claims 1 to 10 **characterised in that** it comprises means to attach containment vessel (4) to an armature (3) attached to a pole (2), said means comprising:
- support means (21) comprising a portion in the form of a frame (22) intended to receive the component (4) to be secured as well as an attachment portion (23),
- anchoring means (20) intended to be secured to armature (3) said anchoring means (20) comprising two tightening devices (25, 26) intended to cooperate together to secure anchoring means (20) to armature (3) by tightening, said anchoring means (20) comprising in addition an anchoring device (31) intended to cooperate with the attachment portion (23) of support means (21) to anchor support means (21) to anchoring means (20) before securing them.

12. System according to Claim 11 **characterised in that** the anchoring device (29) of anchoring means (20) comprises an anchor bolt and **in that** the attachment portion (23) of support means (21) comprises an attachment plate (23) in which a light is arranged (30), said light (30) being designed to be slid along the anchor bolt to anchor support means (21) onto anchoring means (20).

13. System according to Claim 12 **characterised in that** the anchoring device (29) comprises a threaded portion (30) enabling anchoring device (29) to be screwed into anchoring means (20) and a tightening portion (32) arranged on its free end, said tightening portion (32) being intended to tighten the attachment plate (23) of support means (20) onto armature (3) by turning of the anchor bolt.

14. System according to one of Claims 11 to 13 **characterised in that** it additionally comprises an additional securing device (24) comprising two tightening devices (33, 35) intended to cooperate to secure support means (21) onto armature (3) by tightening.

15. System according to one of Claims 11 to 14 **characterised in that** the securing portion (23) of support means (21) has a shape designed so that the said securing portion (23) at least partially surrounds armature (3).

## Patentansprüche

1. Rückhaltesystem (3) zum Auffangen von Substanzen, die aus einem Transformator (1) entweichen können, bestehend aus einem Behälter (4) zum Auffangen besagter Produkte, **dadurch gekennzeichnet, dass** das System unter anderem aus folgenden Komponenten besteht:
- einer Einrichtung (5) zur Ableitung der im Behälter (4) befindlichen Flüssigkeiten, wobei besagte Ableitungseinrichtung aus folgenden Komponenten besteht:
• einer einen Ablasshohlraum bildenden Wandkonstruktion (7), wobei zwischen den Wänden und dem Boden des Behälters (4) ein Zwischenraum ausgebildet ist, so dass die Flüssigkeiten aus dem Behälter (4) in den Ablasshohlraum gelangen können,
• einem Deckel (8) zum Schließen des durch die Wände (7) gebildeten Ablasshohlraums, um zu verhindern, dass sich besagter Ablasshohlraum direkt mit den aus dem Transformator entweichenden Substanzen füllt und
• einer Ablassleitung (6), die im Ablasshohlraum so angeordnet ist, dass sie am Boden des Behälters (4) entlangführt und von der Form her so ausgebildet ist, dass sie die im Hohlraum befindlichen Flüssigkeiten ableitet,
- einem am Boden des Behälters (4) so angeordneten Bandfilters (12), dass die Flüssigkeiten im Behälter (4) gefiltert werden, bevor sie den Ablasshohlraum erreichen, wobei besagter Bandfilter (12) wasserdurchlässig ist und über Mittel zum Zurückhalten der in den Flüssigkeiten des Behälters (4) vorhandenen Öle verfügt.

2. Rückhaltesystem nach Anspruch 1, **dadurch gekennzeichnet, dass** die Ableitungseinrichtung (5) über ein zweite Wandkonstruktion (10) verfügt, welche so angeordnet ist, dass sie die erste, den Ablasshohlraum bildende Wandkonstruktion (7) umschließt, wobei die Wände (10) der zweiten Wandkonstruktion, die bezogen auf besagte Wände (7) der ersten Wandkonstruktion einen Abstand aufweisen und dementsprechend einen Zwischenhohlraum bilden, derart angeordnet sind, dass zwischen den Wänden (10) und dem Boden des Behälters (4) ein Zwischenraum gebildet wird, so dass die Flüssigkeiten aus dem Behälter (4) in den Zwischenhohlraum gelangen können.

3. System nach Anspruch 1 oder 2, **dadurch gekennzeichnet, dass** die Ableitungseinrichtung (5) Filtersiebe (9, 11) enthält, die so angeordnet sind, dass sie die erste Wandkonstruktion (7) und/oder die zweite Wandkonstruktion (10) umschließen, wobei besagte Filtersiebe (9, 11) so ausgelegt sind, dass sie die im Behälter (4) vorhandenen Feststoffe zurückhalten und die im Zwischen- und/oder Ablasshohlraum vorhandenen Flüssigkeiten durchlassen.

4. System nach einem der Ansprüche 1 bis 3, **dadurch gekennzeichnet, dass** die Ablassleitung (6) in Form eines Trockensiphons ausgelegt ist.

5. System nach einem der Ansprüche 1 bis 4, **dadurch gekennzeichnet, dass** die Ablassleitung (6) so ausgelegt ist, dass die in dem Behälter befindlichen Flüssigkeiten diskontinuierlich abgeleitet werden.

6. System nach einem der Ansprüche 1 bis 5, **dadurch gekennzeichnet, dass** es außerdem über eine zusätzliche Filtereinrichtung (13) verfügt, wobei besagte Filtereinrichtung (13) ein Gehäuse (14) umfasst, das am Boden des Behälters (4) so angebracht ist, dass sich der Ausgang der Ablassleitung (6) im Inneren des Gehäuses (14) befindet.

7. System nach Anspruch 6, **dadurch gekennzeichnet, dass** der im Inneren des Gehäuses befindliche Abschnitt der Ablassleitung (6) perforierte Wände aufweist und dass die zusätzliche Filtereinrichtung (13) eine Filterpatrone (15) enthält, die um besagten Abschnitt der Ablassleitung (5) im Inneren des Gehäuses (14) angeordnet ist, wobei die Filterpatrone (15) über Mittel zum Zurückhalten von Ölen verfügt, die in der von der Ablassleitung (5) abgeleiteten Flüssigkeit enthalten sind.

8. System nach Anspruch 7, **dadurch gekennzeichnet, dass** die Filterpatrone (15) eine zylindrische Form mit einer mittigen Öffnung zur Aufnahme des im Inneren des Gehäuses (14) befindlichen Abschnitts der Ablassleitung (5) aufweist.

9. System nach einem der Ansprüche 7 oder 8, **dadurch gekennzeichnet, dass** das Gehäuse (14) eine Öffnung zum Einsetzen und Herausnehmen der Filterpatrone (15) in der zusätzlichen Filtereinrichtung (13) besitzt.

10. System nach einem der vorhergehenden Ansprüche 7 bis 9, **dadurch gekennzeichnet, dass** die zusätzliche Filtereinrichtung (13) eine Ablassleitung (16) enthält, die so angeordnet ist, dass sie am Boden besagten Behälters (14) entlangführt und von der Form her so ausgebildet ist, dass sie die im Gehäuse (14) befindlichen Flüssigkeiten ableitet.

11. System nach einem der vorhergehenden Ansprüche 1 bis 10, **dadurch gekennzeichnet, dass** es Mittel zur Befestigung des Auffangbehälters (4) an einer an einem Mast (2) befestigten Bewehrung (3) enthält, wobei besagte Mittel aus folgenden Komponenten bestehen:
- Stützmitteln (21), bestehend aus einem rahmenförmigen Abschnitt (22) zur Aufnahme des zu befestigenden Elements (4) sowie einem Befestigungsabschnitt (23),
- Verankerungsmitteln (20) zur Befestigung an der Bewehrung (3), wobei besagte Verankerungsmittel (20) zwei Spannelemente (25, 26) besitzen, die dazu beitragen sollen, eine Befestigung der Verankerungsmittel (20) an der Bewehrung (3) durch Andrücken zu ermöglichen, wobei besagte Verankerungsmittel (20) darüber hinaus ein Verankerungselement (31) enthalten, das mit dem Befestigungsabschnitt (23) der Stützmittel (21) dazu beitragen soll, die Stützmittel (21) an den Verankerungsmitteln (20) vor der Befestigung zu verankern.

12. System nach Anspruch 11, **dadurch gekennzeichnet, dass** das Verankerungselement (29) der Verankerungsmittel (20) eine Ankerstange aufweist, und dass der Befestigungsabschnitt (23) der Stützmittel (21) eine Befestigungsplatte (23) enthält, die mit einer Öffnung (30) versehen ist, wobei besagte Öffnung (30) zur Verankerung der Stützmittel (21) auf den Verankerungsmitteln (20) für ein Aufziehen auf die Ankerstange ausgelegt ist.

13. System nach Anspruch 12, **dadurch gekennzeichnet dass** das Verankerungselement (29) zum Einschrauben in die Verankerungsmittel (20) einen Gewindeabschnitt (31) und an seinem freien Ende einen Spannabschnitt (32) aufweist, wobei besagter Spannabschnitt (32) dazu vorgesehen ist, durch Schrauben der Ankerstange die Befestigungsplatte (23) der Stützmittel (20) gegen die Bewehrung (3) zu drücken.

14. System nach einem der Ansprüche 11 bis 13, **dadurch gekennzeichnet, dass** es außerdem ein aus zwei Spannelementen (33, 35) bestehendes zusätzliches Befestigungselement (24) aufweist, das dazu beitragen soll, die Stützmittel (21) durch Anziehen an der Bewehrung (3) zu befestigen.

15. System nach einem der Ansprüche 11 bis 14, **dadurch gekennzeichnet, dass** der Befestigungsabschnitt (23) der Stützmittel (21) von seiner Form her so gestaltet ist, dass besagter Befestigungsabschnitt (23) zumindest teilweise die Bewehrung (3) umschließt.
